# EUROPÄISCHE PATENTSCHRIFT

(11) **EP 0 988 235 B1**
(45) Veröffentlichungstag und Bekanntmachung des Hinweises auf die Patenterteilung: **03.04.2002**
(21) Anmeldenummer: 98930801.0
(22) Anmeldetag: 12.06.1998
(51) Int. Cl.: B65D 41/17, B65D 41/04, B65D 51/16, F16B 39/00

(54) **SCHRAUBVERBINDUNG SOWIE VERFAHREN ZUM VERSCHLIESSEN EINES BEHÄLTERS**
SCREW CONNECTION AND METHOD FOR CLOSING A CONTAINER
ASSEMBLAGE PAR VIS ET PROCEDE POUR FERMER UN CONTENANT

(30) Priorität: 13.06.1997 DE 19724998; 30.06.1997 DE 19727723
(43) Veröffentlichungstag der Anmeldung: 29.03.2000
(73) Patentinhaber: Richard Herbst GmbH, 85402 Kranzberg (DE)
(72) Erfinder: Herbst, Richard, 85386 Eching (DE)
(74) Vertreter: Witte, Alexander, Dr.-Ing.
(86) Internationale Anmeldenummer: EP9803565
(87) Internationale Veröffentlichungsnummer: WO9856674

(56) Entgegenhaltungen:
- EP-A- 0 165 026
- DE-A- 3 708 472
- FR-A- 2 565 939
- US-A- 4 674 643
- US-A- 4 990 044

## Beschreibung

Die Erfindung betrifft eine Schraubverbindung mit einem Innengewinde und einem damit verschraubbaren Außengewinde, bei der mindestens eines der Gewinde mit ersten, elastisch verformbaren Gewindezähnen und das andere Gewinde mit zweiten Gewindezähnen versehen ist und die Gewinde im Bereich der Gewindezähne so ausgebildet sind, daß sie in Schließrichtung in einer axialen Bewegung zusammenfügbar sind, während der die ersten Gewindezähne unter elastischer Verformung axial über die zweiten Gewindezähne schnappen und sich widerhakenartig hinter diese legen, wobei die ersten Gewindezähne an ihrem freien Ende mit einer Stirnfläche versehen sind.

Die Erfindung betrifft ferner ein Verfahren zum Verschließen eines Behälters mit einer ein Innengewinde aufweisenden Schraubkappe, bei dem die Schraubkappe mit einem mit einem Außengewinde versehenen Hals des Behälters verschraubt wird.

Die Erfindung bezieht sich ganz allgemein auf das Gebiet der Schraubverbindungen, also beispielsweise auf die Verbindung von Schrauben mit Muttern, auf die Verbindung von schraubbaren Hülsen, beispielsweise Muffen, mit Innenkörpern oder -rohren und dergleichen. Ein bevorzugter Anwendungsbereich der Erfindung, ohne diese darauf zu beschränken, ist jedoch der Bereich der Schraubverbindungen, wie sie zwischen Verschlußkappen und Behältern unterschiedlichster Art verwendet werden. Hier wiederum sei als ein Beispiel für den gesamten Anwendungsbereich das Gebiet der Schraubkappen genannt, die auf einen Hals einer Flasche aufgeschraubt werden.

Im Rahmen der vorliegenden Erfindung sind als Schraubverbindungen alle Verbindungen zu verstehen, bei denen zwei Elemente miteinander verschraubt werden. Dabei kann ein Element festgehalten und das andere Element auf das eine Element aufgeschraubt werden oder umgekehrt. So kann zum Beispiel eine Verschlußkappe auf einen Flaschenhals aufgeschraubt werden, oder der Flaschenhals wird in die Schraubkappe eingedreht. Selbstverständlich können aber auch beide Elemente relativ zueinander verdreht werden.

Wenn im Rahmen von industriellen Anwendungen Güter in derartigen Behältern oder Flaschen verpackt werden, ist es erforderlich, diese Behälter bzw. Flaschen am Ende des Befüllungsvorganges mit Schraubkappen zu verschließen. Dieser Vorgang des Verschließens erfordert eine bestimmte Zeit, die unter anderem dadurch bemessen ist, daß die Schraubkappe über eine bestimmte Anzahl von Gewindegängen nur mit einer gewissen Höchstdrehzahl aufgeschraubt werden kann. Auch wenn es sich dabei je Verschlußvorgang nur um sehr geringe Zeitdauern im Sekundenbereich handelt, addieren sich diese Zeiten jedoch bei der Großserienherstellung bzw. -verpackung beträchtlich.

Entsprechendes gilt dann, wenn Schraubkappen dieser Art durch Kunststoff-Spritzgießen hergestellt werden. Um das Innengewinde der Schraubkappen auszubilden, muß nämlich in einen Formhohlraum eines Spritzgießwerkzeugs ein entsprechender Kern mit komplementärem Außengewinde eingebracht werden, der während des Spritzgießvorganges mit Kunststoff umspritzt wird. Zum Entformen der Schraubkappe muß diese dann von dem Kern abgedreht werden. Auch dies erfordert eine gewisse Zeit und verlängert damit die Zykluszeit des Spritzgießvorganges.

Aus der DE-A-37 08 472 ist ein Schraubteil aus Kunststoff bekannt, nämlich eine Schraubkappe, wie sie auf Kunststoffflaschen zum Verschließen derselben aufgeschraubt werden kann.

Zum schnelleren Entformen dieser Schraubteile aus einem Werkzeug einer Kunststoff-Spritzgießmschine ist vorgesehen, das Innengewinde der Schraubteile lediglich segmentweise auszubilden, wobei zwischen den Gewindesegmenten axial verlaufende Zwischenräume oder Lücken vorgesehen sein können. Zum Entformen dieser bekannten Schraubkappen werden dieselben "mit Gewalt" axial vom Kern abgezogen, wobei die Gänge bzw. Zähne der Gewindesegmente einerseits und die Lücken andererseits so dimensioniert sind, daß die Gewindezähne über die entsprechenden Zähne des komplementären Kerns hinüberrutschen, andererseits aber durch die segmentartige Anordnung Beschädigungen vermieden werden sollen.

Bei dieser bekannten Vorrichtung sind zwar schnelle Entformungsvorgänge möglich, die zum Entformen erforderliche Kraft ist jedoch beträchtlich, und es kann nicht sichergestellt werden, daß beim schnellen Entformen doch Beschädigungen an den Gewindegängen auftreten. Darüber hinaus ist die bekannte Schraubkappe mit herkömmlichen Zahnformen im Bereich der Gewindesegmente versehen. Wenn diese so ausgestaltet werden, daß sie "mit Gewalt" über die komplementären Gewindezähne des Kerns gezogen werden können, so müssen die Zähne relativ flach und im Übergang stetig ausgebildet werden. Dies bedeutet wiederum, daß keine Schraubkappen herstellbar sind, die durch festes Anziehen verriegelt werden können und dadurch eine hohe Dichtwirkung aufweisen.

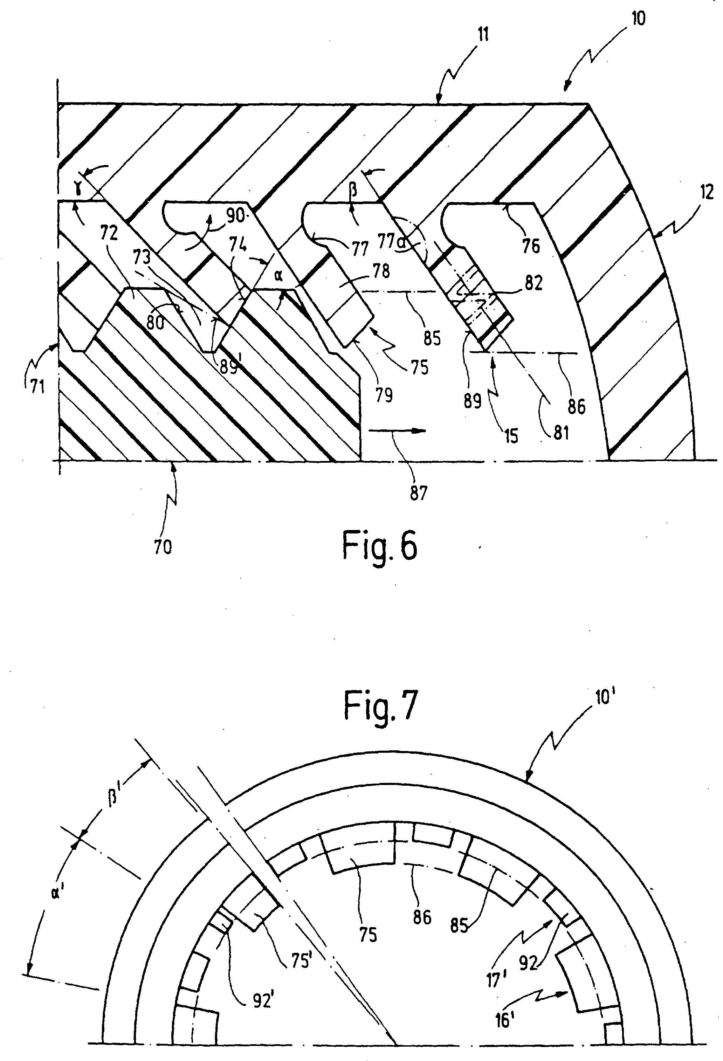

Aus dem Dokument EP 0 165 026 A1 ist eine Befestigungsvorrichtung bekannt, wie sie zum Zusammenfügen flächiger Bauteile von Kraftfahrzeugen, insbesondere Verkleidungen, verwendet wird. Bei dieser bekannten Vorrichtung ist ein schraubkappenförmiger Körper aus Kunststoff vorgesehen, der mit einem Innengewinde versehen ist. Dieser Körper kann axial über einen metallischen Bolzen geschoben werden, der ein Außengewinde aufweist. Dabei schnappen die elastischen Kunststoff-Gewindezähne des Körpers über die metallischen Zähne des Schraubbolzens. Nach dem Zurückschnappen liegen die elastischen Zähne zunächst nur mit einer Kante an der hinteren Flanke der Gegenzähne des Schraubbolzens an (Fig. 6). Erst wenn eine axiale Zugkraft ausgeübt wird, tritt eine weitere Verkeilung derart ein, daß sich die Zähne mit ihrer Stirnfläche bündig, d.h. flächig an diese Rückflanken anlegen (Fig. 7). Die elastischen Gewindezähne des Körpers verjüngen sich nach außen hin, und zwar unter einem Winkel von etwa 15°. Damit werden die Zähne beim Überschnappen gesamthaft verbogen.

Der Erfindung liegt die Aufgabe zugrunde, eine Schraubverbindung sowie ein Verfahren der eingangs genannten Art dahingehend weiterzubilden, daß eine Schraubverbindung erreicht wird, die sich von selbst in ihrer Endlage verkeilt.

Bei einer Schraubverbindung der eingangs genannten Art wird diese Aufgabe erfindungsgemäß dadurch gelöst, daß die Gewinde so ausgebildet sind, daß die Stirnflächen der zurückgeschnappten ersten Gewindezähne sich unter Beibehaltung einer restlichen elastischen Verformung der ersten Gewindezähne in Richtung der Gewindeachse von hinten bündig gegen hintere Zahnflanken der zweiten Gewindezähne anlegen und dort aufliegen.

Bei einem Verfahren der eingangs genannten Art wird die Aufgabe erfindungsgemäß dadurch gelöst, daß das Innengewinde und das Außengewinde als Schraubverbindung der vorstehend genannten Art ausgebildet werden, und daß die Schraubkappe in einer axialen Bewegung auf den Behälterhals aufgeschoben wird, wobei die Gewindezähne der Gewinde axial übereinanderschnappen.

Bei einer bevorzugten Weiterbildung der erfindungsgemäßen Schraubverbindung wird die Verriegelung, wie bereits erwähnt, dadurch bewirkt, daß die Schraubkappe am Ende der axialen Bewegung fixiert wird, vorzugsweise durch eine Drehbewegung.

Dies kann in weiterer bevorzugter Ausbildung der Erfindung durch Verkeilen der elastisch verformten Gewindezähne des einen Gewindes an den Gewindezähnen des anderen Gewindes in ihrer widerhakenartigen Position bewirkt werden. Alternativ oder zusätzlich kann die Verriegelung durch Ineinandergreifen zweier nichtelastischer Gewindezähne bewirkt werden, die am Ende der axialen Bewegung in Eingriff miteinander kommen.

In beiden Fällen wird die Verriegelung somit dadurch bewirkt, daß die Gewinde am Ende des axialen Bewegungsvorganges durch eine kurze Verschraubbewegung gegeneinander fixiert werden.

Die Verriegelung am Ende der axialen Bewegung braucht jedoch nicht notwendigerweise durch eine Drehbewegung bewirkt zu werden. Alternativ oder zusätzlich kann auch vorgesehen sein, die Verriegelung durch eine elastische axiale Anlage der Gewinde aneinander zu bewirken. Dies geschieht vorzugsweise dadurch, daß ein elastisches Element axial zwischen mit den Gewinden versehenen Teilen der Schraubverbindung vorgesehen ist, das am Ende der axialen Bewegung zusammengedrückt wird.

Diese Maßnahme hat den Vorteil, daß ganz allgemein bei Schraubverbindungen eine zuverlässige Anlage der über- bzw. hintergeschnappten Zähne hinter den Zähnen des jeweils anderen Gewindes erreicht wird, wobei die axiale Anlagekraft durch die Federkonstante und den Federweg des elastischen Elementes einstellbar ist.

Bei einer weiteren bevorzugten Ausgestaltung der Erfindung kommen die übergeschnappten Zähne des einen Gewindes mit ihrer rückseitigen Zahnflanke auf der vorderen Zahnflanke des nächstfolgenden Zahns des anderen Gewindes zur Anlage.

Diese Maßnahme hat den Vorteil, daß die übergeschnappten Zähne von selbst in ihrer Endlage verkeilt werden, wobei die Keilwinkel in Verbindung mit dem Reibungskoeffizienten der Oberfläche der Zähne entsprechend eingestellt werden.

Besonders bevorzugt ist weiterhin, wenn die elastisch verformbaren Gewindezähne als Gewindesegmente ausgebildet sind, die über den Umfang des Gewindes durch axial verlaufende Lücken voneinander getrennt sind.

Diese Maßnahme hat den Vorteil, daß die Gewindezähne in einfacherer Weise elastisch verformbar ausgebildet werden können, und zwar umso einfacher, je kleiner der Umfangswinkel ist, den jedes Gewindesegment überdeckt. Ferner können auf diese Weise Kanäle in der Schraubverbindung gebildet werden, durch die ein unter Druck stehendes Gas aus einem verschlossenen Behälter entweichen kann.

Bei dem zuletzt genannten Ausführungsbeispiel wird eine besonders gute Wirkung dann erzielt, wenn in den Lücken axial verlaufende Führungsstege angeordnet sind und der Durchmesser des Gewindes im Bereich der Führungsstege im wesentlichen gleich dem Durchmesser des anderen Gewindes ist.

Diese Maßnahme hat den Vorteil, daß zum Beispiel beim Aufschieben einer Verschlußkappe auf einen Flaschenhals die Verschlußkappe durch die Führungsstege auf den Gängen des Außengewindes des Flaschenhalses zentriert wird. Die Zentrierung ist deswegen wichtig, weil die Gewindesegmente des Innengewindes der Schraubkappe ja elastisch verformbar sind, so daß sie nicht als starre Führung auf den Gewindegängen des Außengewindes des Flaschenhalses laufen können. Diese Führungsfunktion wird bei diesem Ausführungsbeispiel von den Führungsstegen übernommen. Die Führungsstege können darüber hinaus noch eine Stabilisierung der elastisch verformbaren Gewindezähne des Innengewindes der Schraubkappe ausüben, und zwar in Umfangsrichtung, da die Führungsstege starr ausgebildet sind und daher zum Abstützen der elastisch verformbaren Gewindesegmente dienen können, insbesondere dann, wenn die Schraubkappe mittels der elastisch verformbaren Gewindesegmente durch Verdrehen verriegelt wird.

Bei weiteren Ausführungsbeispielen der Erfindung können die elastisch verformbaren Gewindezähne in Richtung ihrer Zahnachsen gleichfalls elastisch verformbar sein.

Diese Maßnahme hat den Vorteil, daß die Schraubverbindung ebenfalls elastisch belastbar ist. Wenn die Schraubverbindung zum Beispiel in dem erwähnten Anwendungsfall einer Schraubkappe auf einem Flaschenhals eingesetzt wird, so hat die Elastizität der Gewindezähne in Richtung ihrer Achse den Vorteil, daß die Schraubkappe zum Verschließen von solchen Flaschen eingesetzt werden kann, in denen sich ein unter Druck stehendes Medium befindet, beispielsweise ein kohlensäurehaltiges Getränk. Entsprechendes gilt dann, wenn die Flasche unterschiedlichen Temperaturen ausgesetzt ist, so daß der Flascheninhalt sich entsprechend ausdehnt und zusammenzieht. In all diesen Fällen kann die Elastizität der Gewindezähne bewirken, daß die Dichtwirkung der Schraubkappe erhalten bleibt, auch wenn sich der Druck im Flascheninneren ändert.

Besonders bevorzugt ist eine Ausführungsform der erfindungsgemäßen Schraubverbindung, bei der die Schraubkappe eine radiale innere Stirnfläche aufweist und der Behälterhals an seinem freien Ende mit einer vorderen Stirnfläche versehen ist, wobei die vordere Stirnfläche mit einem elastischen Dichtelement versehen ist, und das Dichtelement in der Schließstellung der Schraubverbindung elastisch dichtend zwischen den Stirnflächen eingeklemmt ist.

Diese Maßnahme hat den Vorteil, daß eine vollständige Dichtung durch einfaches Aufschieben der Verschlußkappe auf den Flaschenhals (oder umgekehrt) erreicht werden kann, ohne daß die Schraubkappe anschließend noch durch Verdrehen verriegelt werden muß.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen, oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Längsschnitt durch eine Schraubkappe, wie sie gemäß einem Ausführungsbeispiel eines erfindungsgemäßen Verfahrens oder mittels eines Ausführungsbeispiels einer erfindungsgemäßen Vorrichtung durch Spritzgießen hergestellt werden kann, und zwar in einer Ansicht entlang der Linie I-I von Fig. 2;
- Fig. 2: eine Ansicht von unten auf die in Fig. 1 dargestellte Schraubkappe;
- Fig. 3: einen Längsschnitt durch einen Ausschnitt aus einem Werkzeug, wie es zur Herstellung der in Fig. 1 und 2 dargestellten Schraubkappe verwendet werden kann;
- Fig. 4 und 5: perspektivische Ansichten eines Kerns, wie er im Werkzeug gemäß Fig. 3 verwendet werden kann, und zwar in zwei unterschiedlichen Betriebsstellungen;
- Fig. 6: einen Ausschnitt aus Fig. 1, in stark vergrößertem Maßstab, zur Darstellung weiterer erfindungsgemäßer Einzelheiten der dort gezeigten Gewindesegmente;
- Fig. 7: eine Darstellung ähnlich Fig. 2, in vergrößertem Maßstab, zur Erläuterung eines weiteren Ausführungsbeispiels der Erfindung;
- Fig. 8: eine Darstellung, ähnlich Fig. 6, zur Erläuterung eines weiteren Ausführungsbeispiels der Erfindung; und
- Fig. 9: eine weitere Darstellung, ähnlich Fig. 6 und 8, zur Erläuterung eines weiteren Ausführungsbeispiels der Erfindung.

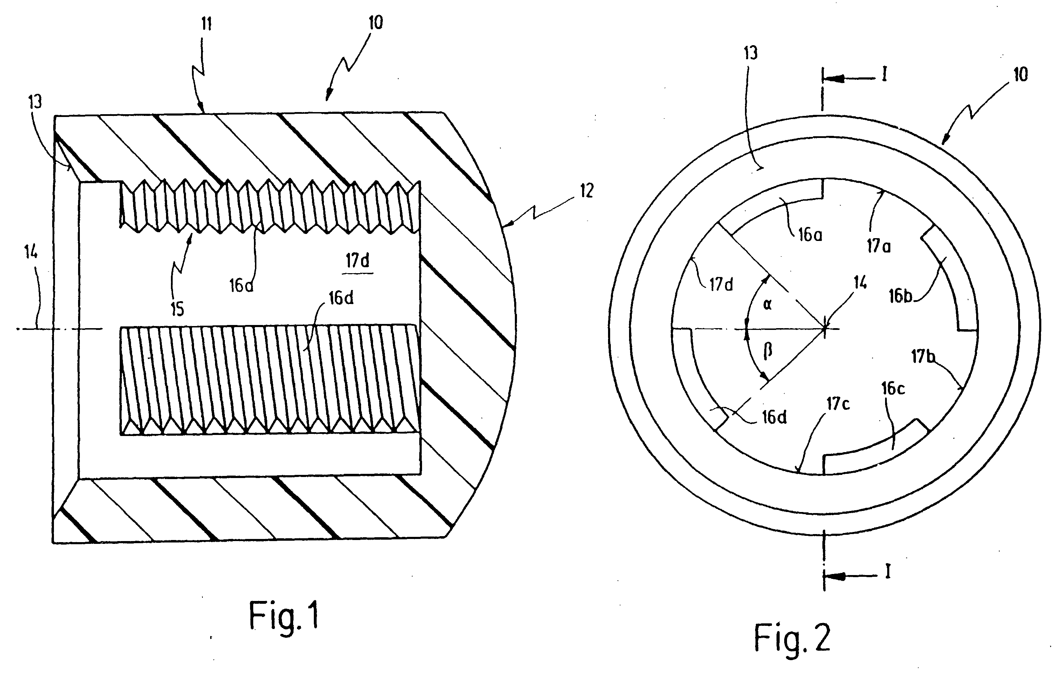

In Fig. 1 und 2 bezeichnet 10 insgesamt eine Schraubkappe, wie sie bspw. zum Verschließen von Kunststoffflaschen oder ähnlichen Behältern eingesetzt werden kann.

Die Schraubkappe 10 umfaßt einen hohlzylindrischen Mantelabschnitt 11 sowie einen geschlossenen Endabschnitt 12. An dem dem Endabschnitt 12 gegenüberliegenden Ende ist die Schraubkappe 10 mit einer Öffnung versehen, die über eine Einführschräge 13 zugänglich ist. Die Achse der Schraubkappe 10 ist mit 14 bezeichnet.

Der hohlzylindrische Mantelabschnitt 11 weist ein Innengewinde 15 auf. Das Innengewinde 15 besteht im dargestellten Ausführungsbeispiel aus vier Gewindesegmenten 16a bis 16d, die über den Umfang des Innengewindes 15 bzw. des Mantelabschnitts 11 verteilt angeordnet sind. Die Darstellung gemäß Fig. 1 ist insoweit nur äußerst schematisch zu verstehen. Das Gewinde mit den Gewindesegmenten 16a bis 16d hat im einzelnen eine von herkömmlichen Zahnformen derartiger Gewinde abweichende Form, wie dies weiter unten anhand von Fig. 6 noch näher erläutert werden wird.

Zwischen den Gewindesegmenten 16a bis 16d befindet sich eine entsprechende Anzahl von axialen Lücken 17a bis 17d. Das Gewinde kann ein- oder mehrgängig sein. Die Zahnform des Gewindes kann in weiten Bereichen variieren. Im Übergang zu den axialen Lücken 17a bis 17d können die Kanten an den freien Enden der Zähne der Gewindesegmente 16a bis 16d abweichend konturiert, z.B. mit einer Lippe versehen sein. Hierdurch wird ein Spielausgleich bewirkt und die Dichtwirkung verbessert.

Der von den Lücken 17a bis 17d eingenommene Umfangswinkel ist in Fig. 2 mit α, der von den Gewindesegmenten 16a bis 16d eingenommene Umfangswinkel ist mit β bezeichnet. Vorzugsweise ist α etwas größer als β dimensioniert.

Es versteht sich, daß die in den Fig. 1 und 2 dargestellte Anordnung in mehrfacher Hinsicht nur beispielhaft zu verstehen ist. So können bspw. statt vier Gewindesegmenten 16a bis 16d auch weniger oder mehr derartige Gewindesegmente vorgesehen sein. Auch brauchen die Gewindesegmente 16a bis 16d nicht in axialer Richtung ganz oder teilweise durchzugehen; sie können vielmehr auch in axialer Richtung nur bereichsweise ausgebildet sein. Schließlich ist die dargestellte Art des Gewindes ebenfalls nur beispielhaft zu verstehen. Im Rahmen der vorliegenden Erfindung können Gewindesegmente von nahezu beliebiger Gewindeform hergestellt werden. Die Erfindung umfaßt darüber hinaus auch Kunststoffkörper mit gewindeähnlichen Hinterschneidungen, bspw. bajonettartige Verschlüsse und dgl.

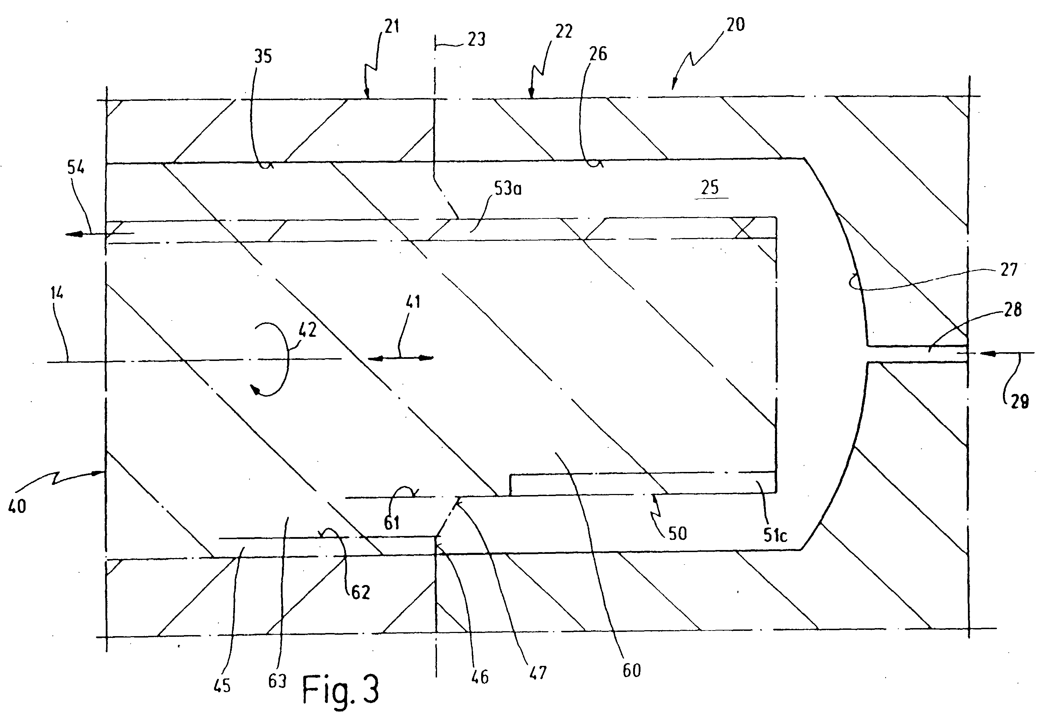

Zur Herstellung einer Schraubkappe 10 gemäß Fig. 1 und 2 wird vorzugsweise ein Werkzeug 20 verwendet, wie es in Fig. 3 ausschnittsweise dargestellt ist.

Das Werkzeug 20 umfaßt eine linke Werkzeughälfte 21 sowie eine rechte Werkzeughälfte 22. Die Werkzeughälften 21, 22 liegen im dargestellten geschlossenen Zustand des Werkzeugs 20 entlang einer Trennebene 23 aneinander.

In der rechten Werkzeughälfte 22 ist ein Formhohlraum 25 vorgesehen. Der Formhohlraum 25 umfaßt einen axialen Wandbereich 26 sowie einen im wesentlichen radial verlaufenden Endbereich 27, die der Außenkontur der Schraubkappe 10 entsprechen. Im Zentrum des Endbereichs 27 ist ein Zuführkanal 28 angedeutet, über den ein flüssiger Kunststoff in den Formhohlraum 25 eingeleitet werden kann, wie mit einem Pfeil 29 angedeutet. Es versteht sich auch insoweit, daß die Darstellung äußerst schematisch zu verstehen ist. So kann z.B. im Zuführkanal 28 ein Nadelventil vorgesehen sein, der Zuführkanal kann auch anders ausgebildet sein und sich an anderer Stelle des Formhohlraums 25 befinden.

In der linken Werkzeughälfte 21 befindet sich eine axiale Führung 35, wobei "axial" eine Führung in Richtung der Achse 14 bedeutet, die für den Formhohlraum 25 und damit die herzustellende Schraubkappe 10 übereinstimmt.

In der Führung 35 läuft ein Einsatzteil 40, das insgesamt in axialer Richtung entlang eines Pfeils 41 verschiebbar ist, andererseits aber auch um die Achse 14 verdreht werden kann, wie mit einem Pfeil 42 angedeutet.

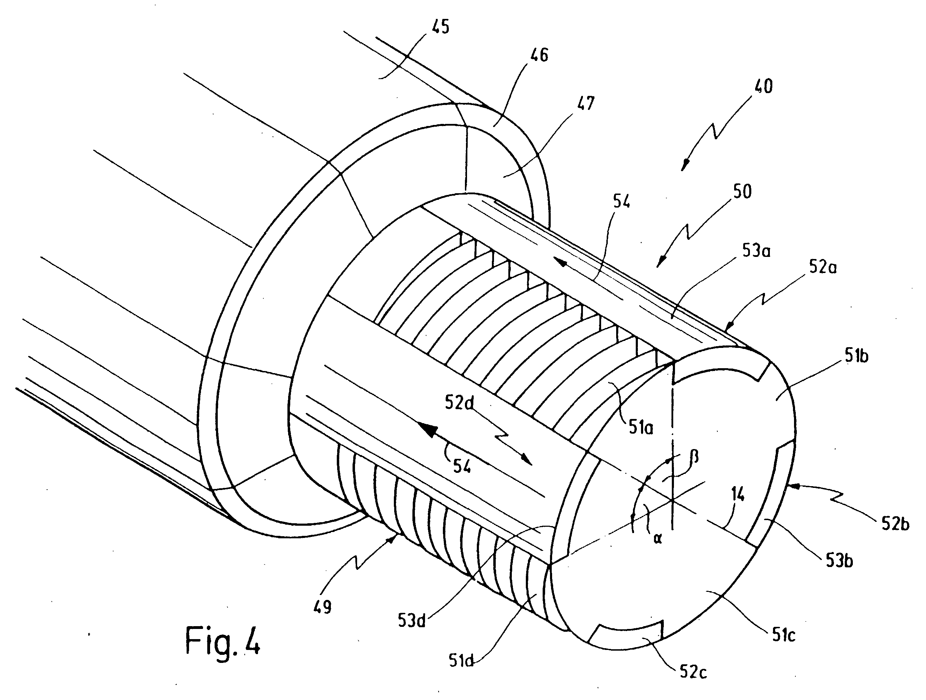

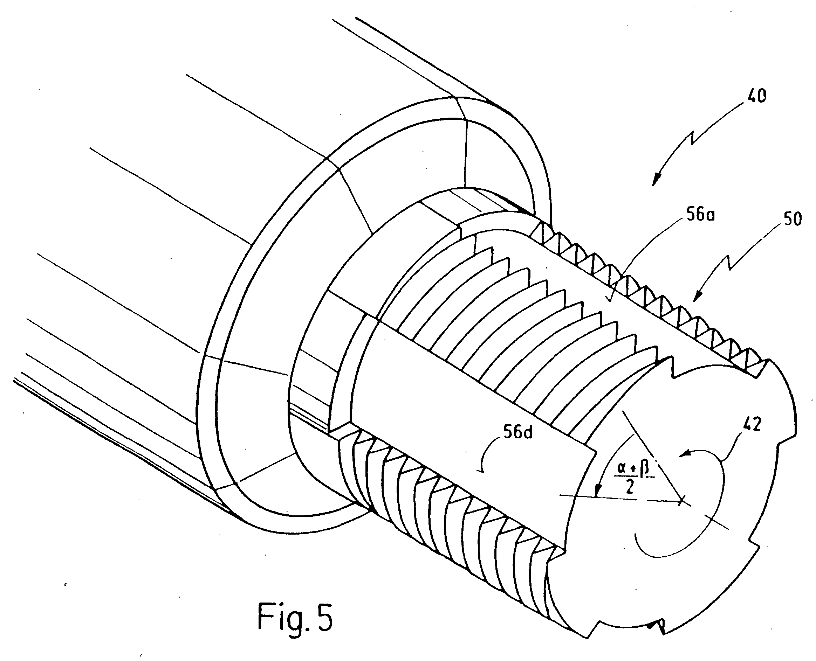

Das Einsatzteil 40 ist mit weiteren Einzelheiten perspektivisch in den Fig. 4 und 5 dargestellt.

Man erkennt, daß das Einsatzteil 40 einen Führungsabschnitt 45 aufweist, der in der Führung 35 der linken Werkzeughälfte 21 läuft. An den Führungsabschnitt 45 schließt sich eine radiale Ringfläche 46 an, die in einen konischen Abschnitt 47 übergeht. Der konische Abschnitt 47 wiederum geht in einen mit einem Außengewinde 49 versehenen Kern 50 über.

In der Darstellung gemäß Fig. 4 ist erkennbar, daß das Außengewinde 49 in Umfangsrichtung nur abschnittsweise ausgebildet ist. Man erkennt nämlich Gewindeabschnitte 51a bis 51d sowie dazwischenliegende Lückenabschnitte 52a bis 52d. Die Gewindeabschnitte 52a bis 52d sind in ihrer Formgebung komplementär zu den Gewindesegmenten 16a bis 16d einschließlich eventueller Konturierungen und Lippen, wie oben beschrieben. Die Lückenabschnitte 52a bis 52d sind in der Betriebsstellung gemäß Fig. 4 von Schiebern 53a bis 53d ausgefüllt, und zwar derart, daß eine insgesamt zylindrische Außenkontur des Kerns 50 entsteht. Anders ausgedrückt, die Außenoberfläche der Schieber 53a bis 53d stimmt mit der Umhüllenden der Gewindeabschnitte 51a bis 51d überein. Die Schieber können alternativ aber auch einen größeren Durchmesser haben. In bestimmten Fällen können die Schieber sogar geringfügig kleiner im Durchmesser ausgeführt werden.

Die Schieber können darüber hinaus auch mit Ausnehmungen versehen sein, um in den axialen Lücken 17a bis 17d des Innengewindes 15 der Schraubkappe 10 axial verlaufende, starre Stege auszubilden, wie dies weiter unten anhand von Fig. 7 noch näher erläutert werden wird.

Die Schieber 53a bis 53d sind in axialer Richtung verschiebbar, wie mit Pfeilen 54 in Fig. 4 angedeutet.

Fig. 5 zeigt eine weitere Betriebsstellung des Einsatzteils 40, in der die Schieber 53a bis 53d in axialer Richtung zurückgezogen sind, und zwar bis außerhalb des von den Gewindeabschnitten 51a bis 51d eingenommenen axialen Bereiches.

Man erkennt, daß auf diese Weise Lücken 56a bis 56d freiliegen.

Aus der Schnittdarstellung von Fig. 3 ist hierzu noch zu entnehmen, daß der Kern 50 in axialer Richtung innerhalb des Einsatzteils 40 verschiebbar sein kann. Hierzu kann eine erste Führung 61 dienen, die mit der Außenkontur der Gewindeabschnitte 51a bis 51d und der Lückenabschnitte 52a bis 52d bzw. der Schieber 53a bis 53d fluchtet. Alternativ kann aber auch eine zweite Führung 62 vorgesehen sein, die ebenfalls durch eine zylindrische Fläche gebildet wird, wobei sich diese jedoch im Übergang vom konischen Abschnitt 57 zur radialen Ringfläche 46 befindet.

Die Wirkungsweise des Werkzeugs gemäß Fig. 3 bis 5 ist wie folgt:

Im geschlossenen Zustand des Werkzeugs 20 gemäß Fig. 3 befindet sich der Kern 50 zunächst in der ersten Arbeitsstellung gemäß Fig. 4. In dieser Arbeitsstellung sind die Schieber 53a bis 53d ganz nach vorne vorgeschoben, wie in der oberen Hälfte von Fig. 3 ebenfalls angedeutet.

Wenn nun über den Zuführkanal 28 flüssiges Kunststoffmaterial in den Formhohlraum 25 eingespritzt wird, wird dieser vollständig ausgefüllt. Das Kunststoffmaterial umgibt daher die Außenoberfläche der vorgeschobenen Schieber 53a bis 53d. Im Bereich der Trennebene 23 legt sich das Kunststoffmaterial an den konischen Abschnitt 47 an, um dort später die Einführschräge 13 der Schraubkappe 10 zu bilden.

Sobald der Kunststoff im Formhohlraum 25 hinreichend erstarrt ist, werden zunächst die Schieber 53a bis 53d axial in Richtung der Pfeile 54 zurückgezogen, bis der Kern 50 die zweite Betriebsstellung gemäß Fig. 5 erreicht hat. In dieser Betriebsstellung ist somit der Raum im Bereich der Lücken 56a bis 56d freigemacht worden, während sich der Kern 50 noch immer innerhalb der nunmehr gespritzten Schraubkappe 10 befindet. Dies kann entweder bei noch geschlossenem Werkzeug 20 der Fall sein oder bei sich bereits öffnendem Werkzeug.

Um nun die Schraubkappe 10 vom Kern 50 zu entformen, wird der Kern 50 in Richtung des Pfeils 42 um die Achse 14 gedreht, und zwar um einen Betrag 1/2 (α + β), wie in Fig. 5 angedeutet. Dann befinden sich nämlich die Gewindeabschnitte 51a bis 51d innerhalb der erstarrten Kunststoffmasse der Schraubkappe 10 an der Stelle, wo sich die Lücken 56a bis 56d zuvor befunden hatten. Da die Gewindeabschnitte 51a bis 51d so breit wie die Lücken 56a bis 56d oder vorzugsweise geringfügig schmaler sind, kann die Schraubkappe 10 nunmehr in axialer Richtung vom Kern 10 entformt werden.

Hierzu ist es zweckmäßig, nur den Kern 50 entlang der Führung 61 oder der Führung 62 aus dem Einsatzteil 40 herauszuziehen. Wenn der Kern 50 entlang der ersten Führung 61 aus dem Einsatzteil 40 herausgezogen wird, kann sich die zu entformende Schraubkappe 10 an dem konischen Abschnitt 47 und der radialen Ringfläche 46 abstützen. Wird der Kern 50 entlang der zweiten Führung 62 aus dem Einsatzteil 40 herausgezogen, kann sich die Schraubkappe 10 immer noch an der radialen Ringfläche 46 abstützen.

Wenn in diesem Zustand das Werkzeug bereits hinreichend weit geöffnet ist und die Achse 14 horizontal verläuft, fällt die fertig gespritzte Schraubkappe 10 unter Schwerkrafteinfluß von selbst nach unten, wenn der Kern 50 hinreichend weit aus der Schraubkappe 10 herausgezogen wurde.

Alternativ kann auch die Schraubkappe 10 vom Kern 50 abgedreht oder es können beide Elemente zueinander verdreht werden.

Ferner kann, anstatt den Kern 50 aus der Schraubkappe 10 herauszuziehen, die Schraubkappe 10 nach dem Verdrehen vom Kern 50 abgestreift werden. Dies kann mittels einer Abstreifplatte geschehen oder besonders bevorzugt dadurch, daß die zurückgezogenen Schieber 52a bis 52d wieder ausgefahren werden. Da die Schieber 52a bis 52d zu diesem Zeitpunkt axial mit den Gewindeabschnitten 51a bis 51d fluchten, wird die Schraubkappe 10 auf diese Weise sicher abgestreift.

Für den nächsten Einspritzvorgang kann nun der Kern 50 mit dem Einsatzteil 40 wieder vorgeschoben werden, wobei es noch nicht einmal erforderlich ist, den Kern 50 um den Winkel 1/2 (α + β) zurückzudrehen, da im darauffolgenden Spritzgießvorgang die nächste Schraubkappe 10 auch in der zweiten Winkelstellung des Kerns 50 gespritzt werden kann, wobei dieser erst zum Entformen der zweiten Schraubkappe 10 wieder in seine ursprüngliche Ausgangsstellung zurückgedreht werden muß.

Fig. 6 zeigt in einer stark vergrößerten Ausschnittsdarstellung Details des Innengewindes 15 der Schraubkappe 10. Ferner zeigt Fig. 6, daß in die Schraubkappe 10 ein Flaschenhals 70 (nur ausschnittsweise dargestellt) eingeschoben ist, der an seinem Außenumfang mit einem Außengewinde 71, beispielsweise einem Trapezgewinde, versehen ist.

Das Außengewinde 71 besteht aus ersten Zähnen 72 bzw. Gewindegängen, die zwischen sich Zahnlücken 73 aufweisen. Die Zahnflanken der ersten Zähne 72 sind mit 74 bezeichnet.

Demgegenüber umfaßt das Innengewinde 15 der Schraubkappe 10 zweite Zähne 75 von spezieller Bauart. Die zweiten Zähne 75 stehen aus einer Innenumfangsfläche 76 des hohlzylindrischen Mantelabschnitts 11 der Schraubkappe 10 vor. Sie sind im Bereich des Zahnfußes mit einer Schwächung 77 oder auf beiden Seiten mit Schwächungen 77 und 77a versehen. Der verbleibende Zahnkörper 78 weist an seinem freien Ende eine Stirnfläche 79 auf, die in der Darstellung gemäß Fig. 6 schräg, in Umfangsrichtung gesehen konisch ausgebildet ist.

Bezeichnet man in der Darstellung gemäß Fig. 6 die Achse der zweiten Zähne 75 mit 81, so kann vorgesehen sein, daß die Zahnkörper 78 mindestens bereichsweise als Federelement 82 ausgebildet sind, beispielsweise durch spiralige oder mäanderförmige Ausnehmungen oder dergleichen.

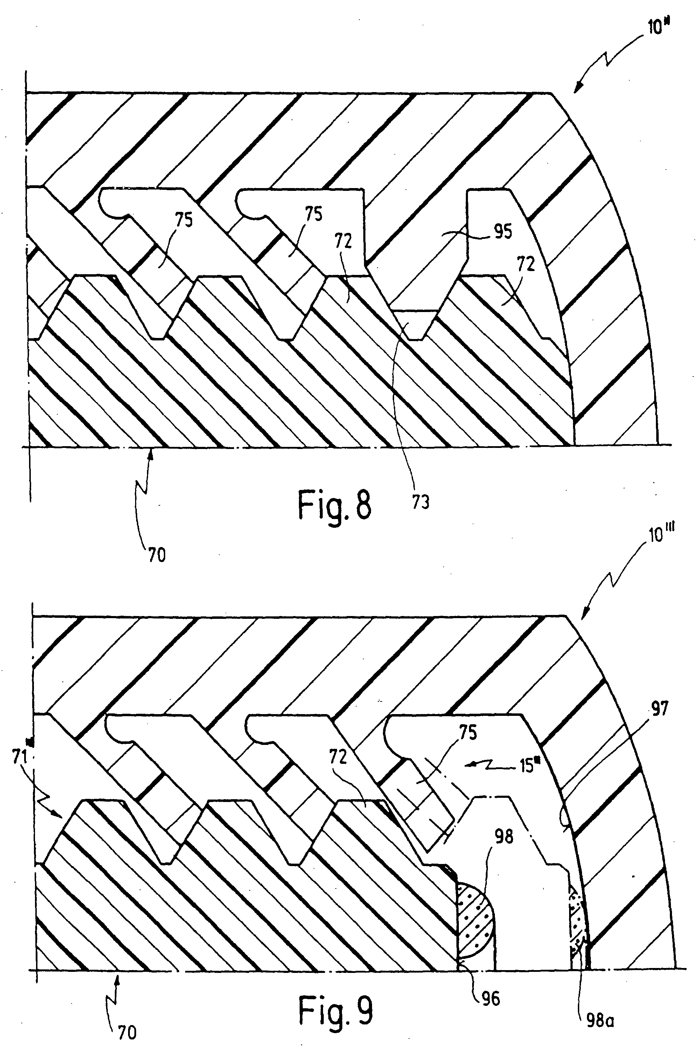

Wie man aus Fig. 8 ferner erkennt, liegen die ersten Zähne 72 auf einem ersten Umfang 85, der größer ist als ein zweiter Umfang 86, bis zu dem sich die Zahnkörper 78 der zweiten Zähne 75 erstrecken. Die Zähne 72 und 75 überlappen daher einander in radialer Richtung.

Die zweiten Zähne 75 sind durch ihre Formgebung und/oder die Wahl des Werkstoffs, aus dem sie bestehen und/oder die angebrachten Schwächungen 77, 77a so ausgebildet, daß sie in Achsrichtung der Schraubkappe 10 elastisch verformbar sind. Dies ist in Fig. 6 mit einem Pfeil 90 angedeutet.

Aufgrund dieser besonderen Bauweise der zweiten Zähne 75 kann nun die Schraubkappe 10 relativ zum Flaschenhals 70 in axialer Richtung verschoben werden, wie mit einem Pfeil 87 angedeutet. Wenn zum Beispiel die Flasche raumfest steht, kann die Schraubkappe 10 in Achsrichtung auf den Flaschenhals 70 aufgeschoben werden. Beim Aufschieben der Schraubkappe 10 treffen die zweiten Zähne 75 mit einer hinteren Zahnflanke 89 der Zahnkörper 78 auf die ersten Zähne 72 des Außengewindes 71 des Flaschenhalses 70. Die zweiten Zähne 75 werden nun aufgrund ihrer besonderen Bauart elastisch verformt, wie bereits erläutert und wie in Fig. 6 mit einem Pfeil 90 angedeutet. Die Zahnkörper 78 gleiten infolgedessen mit ihren Zahnflanken 89 über die ersten Zähne 72. Sobald ein zweiter Zahn 75 einen ersten Zahn 72 in axialer Richtung passiert hat, schnappt er aufgrund seiner Elastizität wieder zurück und in die jeweilige Zahnlücke 73 zwischen den ersten Zähnen 72 hinein.

Die Formgebung der zweiten Zähne 75 ist im Verhältnis zur Formgebung der ersten Zähne 72 nun so gewählt, daß sich die zweiten Zähne 75 nach Art von Widerhaken hinter die ersten Zähne 72 legen. Bevorzugt ist dabei, wenn sich die Zähne 72 nach dem Überschnappen mit ihren rückwärtigen Zahnflanken 89 an die vorderen Zahnflanken 80 der nachfolgenden Zähne 72 anlegen, wie bei 89' in Fig. 6 angedeutet, und sich dort verkeilen.

Beim Ausführungsbeispiel in Fig. 6 sind die Stirnflächen 79 der Zahnkörper 78 so gestaltet, daß sie sich von hinten gegen die hinteren Zanhnflanken 74 der ersten Zähne 72 bündig anlegen, wie mit einem gemeinsamen Winkel α in Fig. 6 angedeutet. Aus Fig. 6 erkennt man ferner, daß die ursprünglich unter einem Winkel β von der Innenumfangsfläche 76 abstehenden zweiten Zähne 75 im eingeschnappten Zustand nur noch um einen Winkel γ zur Innenumfangsfläche 76 erstrecken, also flacher angeordnet sind.

Da die Stirnfläche 79 der zweiten Zähne 75 in diesem Zustand flach auf der Zahnflanke 74 der ersten Zähne 72 aufliegt (bzw. in Umfangsrichtung gesehen entlang einer gemeinsamen konischen Umfangsfläche), können die Gewinde 15 und 71 in dieser Stellung in einfacher Weise miteinander verschraubt werden.

Wenn zusätzlich die Zahnkörper 78 auch in Richtung ihrer Achse 81 elastisch ausgebildet sind, wie mit den Federelementen 82 in Fig. 6 angedeutet, so kann die Schraubkappe 10 auf dem Flaschenhals 70 noch ein gewisses axiles Spiel ausführen, ohne daß sich die Verbindung zwischen den Gewinden 15 und 71 lockert.

In Fig. 7 ist ergänzend dargestellt, daß in Umfangsrichtung gesehen zwischen den zweiten Zähnen 75 noch starre Führungsstege 92 vorgesehen werden können, die sich in axialer Richtung erstrecken. Die Führungsstege 92 sind so dimensioniert, daß sie mit ihrer Innenumfangsfläche auf dem ersten Umfang 85 der ersten Zähne 72 liegen. Die Führungsstege 92 zentrieren damit die Schraubkappe 10 während des Aufschiebens auf den Flaschenhals 70.

Wenn man die Führungsstege 92 (in Fig. 7 nicht dargestellt) in Umfangsrichtung so breit ausbildet, daß sie fast bis zu den zweiten Zähnen 75 reichen, so können die starren Führungsstege 92 auch eine seitliche Stabilisierung der zweiten Zähne 75 in Umfangsrichtung ausüben. Diese Stabilisierung kann hilfreich sein, wenn die Schraubkappe 10 mit einem gewissen Drehmoment auf dem Flaschenhals 70 angezogen wird, weil dann ein unter Umständen beträchtliches Biegemoment in Umfangsrichtung auf die zweiten Zähne 75 ausgeübt wird. Diese können sich dann auf den starren Führungsstegen 92 abstützen.

Mit 16' bzw. 17' ist in Fig. 7 angedeutet, daß es sich hier um entsprechende Elemente zu den Gewindesegmenten bzw. Lücken in Fig. 1 und 2 handelt. Lediglich die Teilung auf dem Umfang ist bei der in Fig. 7 dargestellten Schraubkappe 10' etwas anders als bei der Schraubkappe gemäß Fig. 1 und 2, da die Elastizität der Zähne 75 naturgemäß umso größer ist, je schmaler die Gewindesegmente 16' dimensioniert werden.

Bei entsprechender Dimensionierung des Werkzeugs 20 bzw. des Kerns 50 können die Lücken 17 im Innengewinde 15 der Schraube 10 so dimensioniert werden, daß nach dem Aufschieben der Schraubkappe 10 auf den Flaschenhals 70 im Bereich der Lücken 17 ein Kanal entsteht, sei es bei vollständig verschlossener Schraubkappe 10 oder sei es bei erstmalig geöffneter und dann leicht wieder verschlossener Schraubkappe 10. Diese Kanäle können dazu dienen, einen Druckausgleich zum Innenraum der Flasche zu ermöglichen, in der sich zum Beispiel ein kohlensäurehaltiges Getränk befindet.

Wenn die Schraubkappe 10' gemäß Fig. 7 mit einem Werkzeug gemäß Fig. 3-5 hergestellt werden soll, müssen die zweiten Zähne 75 zusammen mit den Führungsstegen 92 nach dem Verdrehen axial entformbar sein. In der linken Hälfte von Fig. 7 ist daher eine entsprechende Variante dargestellt, bei der der Umfangswinkel β', der von den Zähnen 75' mit den Führungsstegen 92' zusammen eingenommen wird, kleiner ist als der Umfangswinkel α' der Lücke 17.

In Fig. 8 ist eine Variante einer Schraubkappe 10'' dargestellt. Die Schraubkappe 10'' entspricht baulich der Schraubkappe 10 gemäß Fig. 6, mit der Abweichung, daß in der Nähe ihres inneren Endes ein einzelner starrer Gewindegang 95 angeordnet ist. Dieser starre Gewindegang 95 ist so ausgebildet, daß er in eine Zahnlücke 73 des ebenfalls letzten, das heißt vorderen Gewindeganges des Flaschenhalses 70 greift.

Der starre Gewindegang 95 hat den Zweck, die Schraubkappe 10'' auf dem Flaschenhals 70 noch besser zu fixieren, wenn die axiale Bewegung (Pfeil 87 in Fig. 6) ihre Endstellung erreicht hat. Dann wird die Schraubverbindung nicht nur über die elastischen Zähne 75, sondern darüber hinaus auch über den starren Gewindegang 95 fixiert bzw. verriegelt.

Bei der in Fig. 9 dargestellten Variante wird eine gesonderte Verriegelung der Schraubkappe 10 auf dem Flaschenhals 70 durch abschließendes Verdrehen entbehrlich. Die in Fig. 9 dargestellte Schraubkappe 10''' arbeitet nämlich in diesem Fall mit einem Flaschenhals 70 zusammen, dessen freies vorderes Ende mit einer im wesentlichen radial verlaufenden ersten Stirnfläche 96 versehen ist. Diese erste Stirnfläche 96 steht einer zweiten, ebenfalls im wesentlichen radial verlaufenden Stirnfläche 97 auf der Innenseite der Schraubkappe 10''' gegenüber.

Auf der ersten Stirnfläche 96 ist eine Dichtung 98 angeordnet. Die Dichtung 98 kann - wie in Fig. 9 dargestellt - eine O-Ring-artige Dichtung aus einem geschlossenporigen Schaumstoff sein. Sie kann aber auch einstückig als elastische Lippe an den Flaschenhals 70 angeformt sein oder als sonstiges Dichtungselement ausgebildet.

Wichtig ist allein, daß die Dichtung 98 beim vollständigen Aufschieben der Schraubkappe 10''' auf den Flaschenhals 70 zwischen den Stirnflächen 96 und 97 elastisch dichtend eingeklemmt wird, wie strichpunktiert in Fig. 9 mit 98a angedeutet. Der Arbeitsweg der Dichtung 98 beim Einklemmen bzw. Zusammendrücken ist in diesem Fall relativ zum Arbeitsweg der elastischen zweiten Zähne 75 dimensioniert. Die Anordnung ist insgesamt so getroffen, daß nach dem Einschnappen des hintersten der zweiten Zähne 75 hinter den vordersten ersten Zahn 72 auf dem Flaschenhals 70 die Dichtung 98 in der strichpunktiert eingezeichneten Weise eingeklemmt ist. Die Gewinde 15''' und 71''' werden auf diese Weise verriegelt.

Es versteht sich dabei, daß die in Fig. 9 schematisch angedeutete O-Ring-Dichtung 98 nur beispielhaft zu verstehen ist. Selbstverständlich kann die Dichtung 98 auch als mäanderartige Dichtung, teleskopartige Dichtung usw. ausgebildet sein, wobei allein wichtig ist, daß am Ende der Aufschiebbewegung der Verschlußkappe 10''' auf den Flaschenhals 70 eine Dichtung zwischen dem vorderen Ende des Flaschenhalses 70 und der Innenoberfläche der Schraubkappe 10''' entsteht. Die Dichtung 98 steht im übrigen für ein beliebiges axial elastisches Teil einer beliebigen Schraubverbindung, das für die erforderliche Verspannung der zweiten Zähne 75 hinter den ersten Zähnen 72 sorgt.

Es versteht sich, daß die in den Fig. 6 bis 8 dargestellten Anordnungen nur beispielhaft zu verstehen sind. So kann die gesamte Anordnung auch umgekehrt vorgesehen werden, indem die elastischen Zähne auf dem Flaschenhals und die starren Zähne auf der Schraubkappe angeordnet werden. Auch kann man die Zähne auf beiden Gewinden elastisch ausbilden. Schließlich ist es möglich, die elastischen Zähne so zu gestalten, daß sie sowohl beim Verschließen (Aufschieben der Schraubkappe) wie auch beim Öffnen (Abziehen der Schraubkappe) durch elastisches Schnappen über die komplementären Gewindezähne geschoben bzw. gezogen werden können. Zu diesem Zweck kann es zweckmäßig sein, auf einem der beiden Gewinde starre Gewindegänge bzw. -zähne anzubringen, die in beiden axialen Richtungen unterschiedlich, das heißt asymmetrisch ausgebildet sind.

Es versteht sich ferner, daß die Erfindung keinesfalls auf den dargestellten Anwendungsfall von Schraubkappen/Flaschenhälsen beschränkt ist. Die Erfindung kann ebensogut bei Schraubverbindungen zwischen Muttern und Schrauben eingesetzt werden, wie auch bei Schraubhülsen zum Vermuffen von Rohren oder bei Befestigungselementen in Möbeln usw.

## Patentansprüche

1. Schraubverbindung mit einem Innengewinde (71) und einem damit verschraubbaren Außengewinde (15), bei der mindestens eines der Gewinde (15) mit ersten, elastisch verformbaren Gewindezähnen (75) und das andere Gewinde (71) mit zweiten Gewindezähnen (72) versehen ist und die Gewinde (15, 71) im Bereich der Gewindezähne (72, 75) so ausgebildet sind, daß sie in Schließrichtung in einer axialen Bewegung (87) zusammenfügbar sind, während der die ersten Gewindezähne (75) unter elastischer Verformung axial über die zweiten Gewindezähne (72) schnappen und sich widerhakenartig hinter diese legen, wobei die ersten Gewindezähne (75) an ihrem freien Ende mit einer Stirnfläche (79) versehen sind, **dadurch gekennzeichnet, daß** die Gewinde (15, 71) so ausgebildet sind, daß die Stirnflächen (79) der zurückgeschnappten ersten Gewindezähne (75) sich unter Beibehaltung einer restlichen elastischen Verformung der ersten Gewindezähne (75) in Richtung der Gewindeachse von hinten bündig gegen hintere Zahnflanken (74) der zweiten Gewindezähne (72) anlegen und dort aufliegen.

2. Schraubverbindung nach Anspruch 1, **dadurch gekennzeichnet, daß** die ersten Gewindezähne (75) im Bereich ihres Zahnfußes mit einer Schwächung (77) versehen sind, derart, daß die ersten Gewindezähne (75) infolge der Schwächung (77) in Richtung der axialen Bewegung (87) elastisch verformbar (90) sind.

3. Schraubverbindung nach Anspruch 1 oder 2, **dadurch gekennzeichnet, daß** sie am Ende der axialen Bewegung durch eine Drehbewegung verriegelbar ist.

4. Schraubverbindung nach Anspruch 3, **dadurch gekennzeichnet, daß** die Verriegelung durch Verkeilen der elastisch verformten Gewindezähne (75) des einen Gewindes (15) an den Gewindezähnen (72) des anderen Gewindes (71) in ihrer widerhakenartigen Position bewirkt wird.

5. Schraubverbindung nach einem der Ansprüche 3 oder 4, **dadurch gekennzeichnet, daß** die Verriegelung durch Ineinandergreifen zweier nichtelastischer Gewindezähne (72, 95) bewirkt wird, die am Ende der axialen Bewegung (87) in Eingriff miteinander kommen.

6. Schraubverbindung nach einem oder mehreren der Ansprüche 3 bis 5, **dadurch gekennzeichnet, daß** die Verriegelung durch eine elastische axiale Anlage der Gewinde (71, 72) aneinander bewirkt wird.

7. Schraubverbindung nach Anspruch 6, **dadurch gekennzeichnet, daß** ein elastisches Element (98) axial zwischen mit den Gewinden (15''', 71''') versehenen Teilen (10''', 70) der Schraubverbindung vorgesehen ist, das am Ende der axialen Bewegung zusammengedrückt wird.

8. Schraubverbindung nach einem oder mehreren der Ansprüche 1 bis 7, **dadurch gekennzeichnet, daß** übergeschnappte Zähne (75) des einen Gewindes (15) mit ihrer rückseitigen Zahnflanke (89) auf der vorderen Zahnflanke (80) des nächstfolgenden Zahns (72) des anderen Gewindes (71) zur Anlage kommen.

9. Schraubverbindung nach einem oder mehreren der Ansprüche 1 bis 8, **dadurch gekennzeichnet, daß** die elastisch verformbaren Gewindezähne (75) als Gewindesegmente (16a bis 16d) ausgebildet sind, die über den Umfang des Gewindes (15) durch axial verlaufende Lücken (17a bis 17d) voneinander getrennt sind.

10. Schraubverbindung nach Anspruch 9, **dadurch gekennzeichnet, daß** in den Lücken (17') axial verlaufende Führungsstege (92) angeordnet sind, und daß der Durchmesser (85) des Gewindes (15) im Bereich der Führungsstege (92) im wesentlichen gleich dem Durchmesser (85) des anderen Gewindes (71) ist.

11. Schraubverbindung nach einem oder mehreren der Ansprüche 1 bis 10, **dadurch gekennzeichnet, daß** die elastisch verformbaren Gewindezähne (75) in Richtung ihrer Zahnachse (81) gleichfalls elastisch verformbar sind.

12. Schraubverbindung nach einem oder mehreren der Ansprüche 1 bis 11, **dadurch gekennzeichnet, daß** die elastisch verformbaren Gewindezähne (75) an einem Innengewinde (15) vorgesehen sind.

13. Schraubverbindung nach Anspruch 12, **dadurch gekennzeichnet, daß** die Gewindezähne (72) des dem Innengewinde (15) zugeordneten Außengewindes (71) starr sind.

14. Schraubverbindung nach einem oder mehreren der Ansprüche 1 bis 13, **dadurch gekennzeichnet, daß** sie als Verbindung einer Schraubkappe (10) mit einem Behälterhals (70) ausgebildet ist.

15. Schraubverbindung nach Anspruch 14, **dadurch gekennzeichnet, daß** die Schraubkappe (10) eine radiale innere Stirnfläche (97) aufweist und der Behälterhals (70) an seinem freien Ende mit einer vorderen Stirnfläche (96) versehen ist, daß die vordere Stirnfläche (96) mit einem elastischen Dichtelement (98) versehen ist, und daß das Dichtelement (90) in der Schließstellung der Schraubverbindung elastisch dichtend zwischen den Stirnflächen (96, 97) eingeklemmt ist.

16. Verfahren zum Verschließen eines Behälters mit einer ein Innengewinde (15) aufweisenden Schraubkappe (10), bei dem die Schraubkappe (10) mit einem mit einem Außengewinde (71) versehenen Hals (70) des Behälters verschraubt wird, **dadurch gekennzeichnet, daß** das Innengewinde (15) und das Außengewinde (71) als Schraubverbindung nach einem oder mehreren der Ansprüche 1 bis 10 ausgebildet werden, daß die Schraubkappe (10) in einer axialen Bewegung (87) auf den Behälterhals (70) aufgeschoben wird, wobei die Gewindezähne (72, 75) der Gewinde (15, 71) axial übereinanderschnappen.

17. Verfahren nach Anspruch 16, **dadurch gekennzeichnet, daß** die Schraubkappe (10) nach dem Aufschieben durch Verdrehen auf dem Behälterhals (70) verriegelt wird.

## Claims

1. A screw connection having an internal thread (71) and an external thread (15) screw-connected therewith, in which at least a first one (15) of the threads is equipped with first, elastically deformable teeth (75) and a second one (71) of the threads is equipped with second teeth (72), the threads (15, 71) in the area of the teeth (72, 75) being adapted to be assembled along a closing direction in an axial movement (87) during which the first teeth (75) axially snap over the second teeth (72) under elastical deformation and come to rest on the latter in a barb-like manner, wherein the first teeth (75) are provided with a face (79) at a free end thereof, **characterized in that** the threads (15, 71) are configured such that the faces (79) of the first teeth (75) having snapped back come to rest from behind against back teeth flanks (74) of the second teeth (72) and lie thereon, while a residual elastic deformation of the first teeth (75) in the direction of the thread axis is maintained.

2. The screw connection of claim 1, **characterized in that** the first teeth (75) are provided with a weakening (77) in the area of their tooth base, such that the first teeth (75) are elastically deformed (90) along the direction of the axial movement (87) due to the weakening.

3. The screw connection of claim 1 or 2, **characterized in that** it is adapted to be latched by means of a rotary movement at the end of the axial movement.

4. The screw connection of claim 3, **characterized in that** the latching is effected by wedging the elastically deformable teeth (75) of the first thread (15) against the teeth (72) of the second thread (71) in its barb-like position.

5. The screw connection of one of claims 3 or 4, **characterized in that** the latching is effected by the meshing of two non-elastical threads (72, 95) coming into engagement with each other at the end of the axial movement (87).

6. The screw connection of one or more of claims 3 to 5, **characterized in that** the latching is effected by an elastic axial engagement of the threads (71, 72) against each other.

7. The screw connection of claim 6, **characterized in that** an elastic element (98) is provided between those parts (10''', 70) of the screw connection provided with the threads (15''', 71'''), the element (98) being compressed at the end of the axial movement.

8. The screw connection of one or more of claims 1 to 7, **characterized in that** snapped-over teeth (75) of the first thread (15) come to lie with its back tooth flank (89) on the front tooth flank (80) of the next tooth (72) in line of the second thread (71).

9. The screw connection of one or more of claims 1 to 8, **characterized in that** the elastically deformable teeth (75) are configured as tooth segments (16a through 16d) separated from each other over the periphery of the thread (15) by means of axially extending interstices (17a through 17d).

10. The screw connection of claim 9, **characterized in that** axially extending guide ridges (92) are provided within the interstices (17'), and that the diameter (85) of the thread (15) in the area of the guide ridges (92) is essentially equal to the diameter of the second thread (71).

11. The screw connection of one or more of claims 1 to 10, **characterized in that** the elastically deformable teeth (75) are likewise deformable in the direction of their tooth axis (81).

12. The screw connection of one or more of claims 1 to 11, **characterized in that** the elastically deformable teeth (75) are provided on an internal thread (15).

13. The screw connection of claim 12, **characterized in that** the teeth (72) of the outer thread (71) being associated to the inner thread (15) are rigid.

14. The screw connection of any of claims 1 to 13, **characterized in that** it is configured as a connection between a screw cap (10) and a container neck (70).

15. The screw connection of claim 14, **characterized in that** the screw cap (10) is provided with a radial internal face (97), that the container neck (70) is provided with a front face (96) at its free end, that the front face (96) is provided with an elastic sealing element (98), and that the sealing element (98) in the closing position of the screw connection is jammed for an elastic sealing between the surfaces (96, 97).

16. A method of closing a container by means of a screw cap (10) having an internal thread (15), wherein the screw cap (10) is screwed onto a neck (70) of the container having an external thread (71), **characterized in that** the internal thread (15) and the external thread (71) are configured as a screw connection according to one or more of claims 1 to 10, that the screw cap (10) is pushed onto the container neck (70) in an axial moevement (87), wherein the teeth (72, 75) of the threads (15, 71) axially snap over each other.

17. The method of claim 16, **characterized in that** the screw cap (10) is latched by rotating same on the container neck (70) after pushing it thereonto.

## Revendications

1. Assemblage par vis comportant un filetage intérieur (71) et un filetage extérieur (15) apte à être vissé dans celui-ci, dans lequel au moins un des filetages (15) est doté de premières dents de filetage (75) élastiquement déformables et l'autre filetage (71) est doté de deuxièmes dents de filetage (72) et les dents de filetage (72, 75) des filetages (15, 71) sont agencées de manière à permettre leur assemblage dans le sens de fermeture selon un mouvement axial (87), tandis que les premières dents de filetage (75) s'effacent axialement par déformation élastique au-dessus des deuxièmes dents de filetage (72) et se placent derrière celles-ci à la manière d'un crochet de retenue, les premières dents de filetage (75) présentant, à leur extrémité libre, une surface frontale (79), **caractérisé en ce que** les filetages (15, 71) sont conçus de telle sorte que les faces frontales (79) des premières dents de filetage (75) détendues entrent en contact par l'arrière et à affleurement et coopèrent en appui avec les flancs de dent arrière (74) des deuxièmes dents de filetage (72) tout en conservant une déformation élastique résiduelle des premières dents de filetage (75) dans la direction de l'axe de filetage.

2. Assemblage par vis selon la revendication 1, **caractérisé en ce que** les premières dents de filetage (75) présentent une zone de faiblesse (77) au niveau de leur base, de telle sorte que les premières dents de filetage (75) sont élastiquement déformables (90) dans la direction du mouvement axial (87) du fait de ladite zone de faiblesse (77).

3. Assemblage par vis selon la revendication 1 ou 2, **caractérisé en ce qu'**il peut être verrouillé par rotation à la fin du mouvement axial.

4. Assemblage par vis selon la revendication 3, **caractérisé en ce que** le verrouillage est assuré par calage des dents de filetage (75) élastiquement déformées de l'un (15) des filetages contre les dents de filetage (72) de l'autre filetage (71) dans leur position de crochet de retenue.

5. Assemblage par vis selon l'une des revendications 3 ou 4, **caractérisé en ce que** le verrouillage est assuré par engrènement mutuel de deux dents de filetage non élastiques (72, 95), qui entrent en prise à la fin du mouvement axial (87).

6. Assemblage par vis selon l'une au moins des revendications 3 à 5, **caractérisé en ce que** le verrouillage est assuré par appui élastique axial des filetages (71, 72) l'un contre l'autre.

7. Assemblage par vis selon la revendication 6, **caractérisé en ce qu'**il est prévu axialement, entre des parties (10''', 70) de l'assemblage par vis qui présentent les filetages (15''', 71'''), un élément élastique (98) qui est comprimé à la fin du mouvement axial.

8. Assemblage par vis selon l'une au moins des revendications 1 à 7, **caractérisé en ce que** les dents (75) escamotées de l'un (15) des filetages viennent appuyer par leur flanc de dent arrière (89) contre le flanc de dent avant (80) de la dent suivante (72) de l'autre filetage (71).

9. Assemblage à vis selon l'une au moins des revendications 1 à 8, **caractérisé en ce que** les dents de filetage élastiquement déformables (75) se présentent sous la forme de segments de filetage (16a à 16d), qui sont séparés les uns des autres sur la circonférence du filetage (15) par des interstices axiaux (17a à 17d).

10. Assemblage à vis selon la revendication 9, **caractérisé en ce que** des nervures de guidage (92) axiales sont agencées dans les interstices (17') et **en ce que** le diamètre (85) du filetage (15) au niveau des nervures de guidage (92) est sensiblement égal au diamètre (85) de l'autre filetage (71).

11. Assemblage par vis selon l'une au moins des revendications 1 à 10, **caractérisé en ce que** les dents de filetage élastiquement déformables (75) sont également élastiquement déformables dans la direction de leur axe de dent (81).

12. Assemblage par vis selon l'une au moins des revendications 1 à 11, **caractérisé en ce que** les dents de filetage élastiquement déformables (75) sont prévues sur un filetage intérieur (15).

13. Assemblage par vis selon la revendication 12, **caractérisé en ce que** les dents de filetage (72) du filetage extérieur (71) associé au filetage intérieur (15) sont rigides.

14. Assemblage par vis selon l'une au moins des revendications 1 à 13, **caractérisé en ce qu'**il est conçu en tant que moyen de liaison entre un bouchon à vis (10) et un col de récipient (70).

15. Assemblage par vis selon la revendication 14, **caractérisé en ce que** le bouchon à vis (10) présente une face frontale interne radiale (97), **en ce que** le col de récipient (70) présente, à son extrémité libre, une surface frontale avant (96), **en ce que** la face frontale avant (96) est -dotée d'un élément d'étanchéité élastique (98), et **en ce que**, dans la position de fermeture de l'assemblage par vis, ledit élément d'étanchéité (98) est coincé entre les surfaces frontales (96, 97) en assurant l'étanchéité de manière élastique.

16. Procédé de fermeture d'un récipient- dont le bouchon à vis (10) présente un filetage intérieur (15), dans lequel le bouchon à vis (10) est vissé sur un col (70) du récipient, qui présente un filetage extérieur (71), **caractérisé en ce que** le filetage intérieur (15) et le filetage extérieur (71) sont conçus sous la forme d'un assemblage par vis selon l'une au moins des revendications 1 à 10, **en ce que** le bouchon à vis (10) est engagé sur le col de récipient (70) selon un mouvement axial (87), lors duquel les dents de filetage (72, 75) des filetages (15, 71) glissent axialement les unes sur les autres en s'escamotant.

17. Procédé selon la revendication 16, **caractérisé en ce qu'**une fois engagé, le bouchon à vis (10) est verrouillé par rotation sur le col de récipient (70).
